Europäisches Patentamt

European Patent Office

Office européen des brevets

(11) Publication number: 0 419 908 A2

# EUROPEAN PATENT APPLICATION

(21) Application number: 90117215.5

(22) Date of filing: 06.09.90

(51) Int. Cl.⁵: G06F 1/32

(30) Priority: 29.09.89 JP 254965/89

(43) Date of publication of application:
03.04.91 Bulletin 91/14

(84) Designated Contracting States:
DE FR GB

(71) Applicant: Kabushiki Kaisha Toshiba
72, Horikawa-cho Saiwai-ku
Kawasaki-shi(JP)

(72) Inventor: Yamaki, Kazunori, c/o Intellectual
Property Div.
Kabushiki Kaisha Toshiba, 1-1 Shibaura
1-chome
Minato-ku, Tokyo 105(JP)

(74) Representative: Henkel, Feiler, Hänzel &
Partner
Möhlstrasse 37
W-8000 München 80(DE)

(54) Computer system with a sleep mode function.

(57) In a computer system having a sleep mode function, when a condition for setting a sleep mode is satisfied, a low-frequency clock pulse is supplied to a CPU (10). The CPU (10) in turn performs a low-speed operation according to this clock pulse. Setting mode control data in a control register (17) disables the sleep mode. Even when the condition for setting the sleep mode is met, therefore, the CPU (10) receives a high-frequency clock pulse so that the CPU (10) can executes an application program at a normal, high speed.

FIG. 1

## COMPUTER SYSTEM WITH A SLEEP MODE FUNCTION

The present invention relates to a personal computer and, more particularly, to a computer system with a sleep mode function to decrease the processing speed of its CPU to thereby save power (or reduce power dissipation) of the system.

Recently have been developed laptop type personal computers which use a battery (rechargeable internal battery) as the power supply of the computer system. Such computers need some measures to save power because of the limited time for continuous use of the power supply.

The so-called sleep mode function is to reduce the processing speed of a CPU (microprocessor) under predetermined conditions in order to save power of the power supply. When no input/output operation is executed, the CPU does not require the normal processing speed (relatively high speed), making it possible to reduce the CPU's processing speed. The processing speed of the CPU is determined by the frequency of a clock pulse. The sleep mode function therefore switches a clock pulse of a high frequency, which is normally given to the CPU, to the one having a low frequency and supplies it to the CPU in a sleep mode. The predetermined conditions for transition to the sleep mode may be:

(1) The keyboard is not operated by a user for a given period of time.

(2) No file access is done by the CPU for a given period of time.

The above sleep mode function is disclosed in, for example, USP 137,667.

With the above-described conventional personal computer with the sleep mode function in use, when a certain condition, such as no keyboard operation being done for a given period of time, is satisfied, the sleep mode is automatically set. As a result, the clock pulse is switched to a low-frequency one, thus reducing the CPU's processing speed. In other words, when the sleep mode is set, the processing speed of the CPU decreases regardless of the contents of data processing. Even if the condition for setting the sleep mode is met, however, there may be a time that the CPU needs to process data at a high speed as in normal mode. Such a case may be when it is required to run an application program for demonstration while a personal computer is being displayed for a sales purpose. In such a case, when running of the application program starts, a predetermined sequence of processes is often repeatedly executed even if no data is entered from the keyboard. This satisfies one of the aforementioned conditions for setting the sleep mode: no keyboard operation executed for a given period of time. Accordingly, the processing speed of the CPU becomes lower than the one involved in normal mode.

In short, according to the prior art personal computers with a sleep mode function, while the sleep mode function can reduce the power consumption when needed, it may undesirable decrease the processing speed of the CPU even when the CPU should process data at a high speed as done in normal mode.

It is therefore an object of the present invention to provide a computer system with a sleep mode function, which can selectively execute the sleep mode function to save the power of the system and perform the proper data processing without reducing the data processing speed when high-speed data processing is needed.

According to one aspect of the present invention, there is provided a computer system with a sleep mode function, comprising a processor unit, constituting a central processing unit for the system, for executing various types of data processing; a clock control unit for selecting one of a first clock pulse of a predetermined high frequency necessary in normal mode of the processor unit and a second clock pulse of a predetermined low frequency necessary in sleep mode of the processor unit, and supplying the selected clock pulse to the processor unit; a sleep mode control unit for determining whether or not a predetermined condition for executing the sleep mode is met and controlling the clock control unit to supply the second clock pulse to the processor unit when the predetermined condition is met; and a sleep operation control unit for permitting or inhibiting a control operation of the sleep mode control unit and allowing the clock control unit to supply the first clock pulse to the processor unit upon inhibition of the control operation.

This invention can be more fully understood from the following detailed description when taken in conjunction with the accompanying drawings, in which:

Fig. 1 is a block diagram illustrating the arrangement of one embodiment of a computer system according to the present invention;

Fig. 2 is a block diagram showing the specific structure of a sleep mode controller in the embodiment of the present invention;

Fig. 3 is a block diagram illustrating the structure of a peripheral circuit of the embodiment of the present invention;

Fig. 4 is a block diagram showing the specific structure of a clock control circuit in the embodiment of the present invention; and

Figs. 5 and 6 are flowcharts for explaining the operation of the embodiment of the present invention.

A preferred embodiment of this invention will now be described referring to the accompanying drawings.

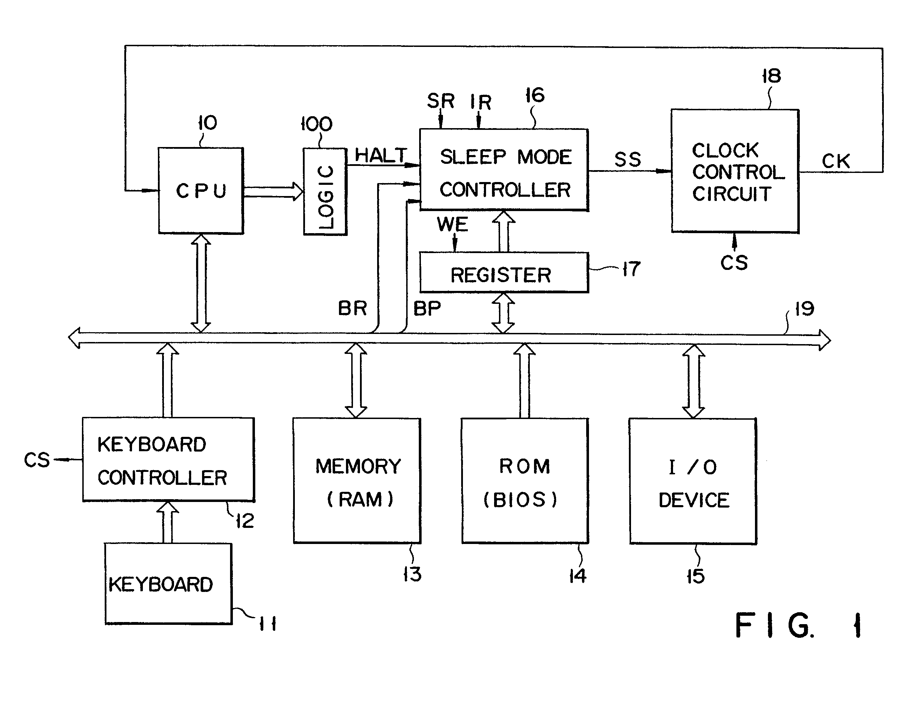

A computer system embodying the present invention is a laptop type personal computer operatable on a rechargeable battery. As illustrated in Fig. 1, the present system comprises a microprocessor 10 constituting a central processing unit (CPU), a keyboard 11, a keyboard controller (KBC) 12, a memory 13, a ROM (Read Only Memory) 14 having a BIOS (Basic I/O System) stored therein, an I/O device 15. The keyboard 11 and KBC 12 constitute an input device for entering data through an operation of various keys on the keyboard 11. The memory 13 comprising a RAM (Random Access Memory) constitutes various registers, such as a key buffer, for storing input data entered from the keyboard 11. As mentioned above, the ROM 14 holds the BIOS for executing an input/output control operation. The I/O device 15 is an external storage device, such as a floppy disk drive.

The present system further comprises a sleep mode controller 16 and a control register 17. The sleep mode controller 16 discriminates whether or not a predetermined condition for executing a sleep mode is satisfied, based on an instruction output from the CPU 10 and the like. When the predetermined condition is met, the controller 16 outputs a control signal SS to a clock control circuit 18. The control register 17 stores mode control data for permitting or inhibiting execution of the control operation of the sleep mode controller 16.

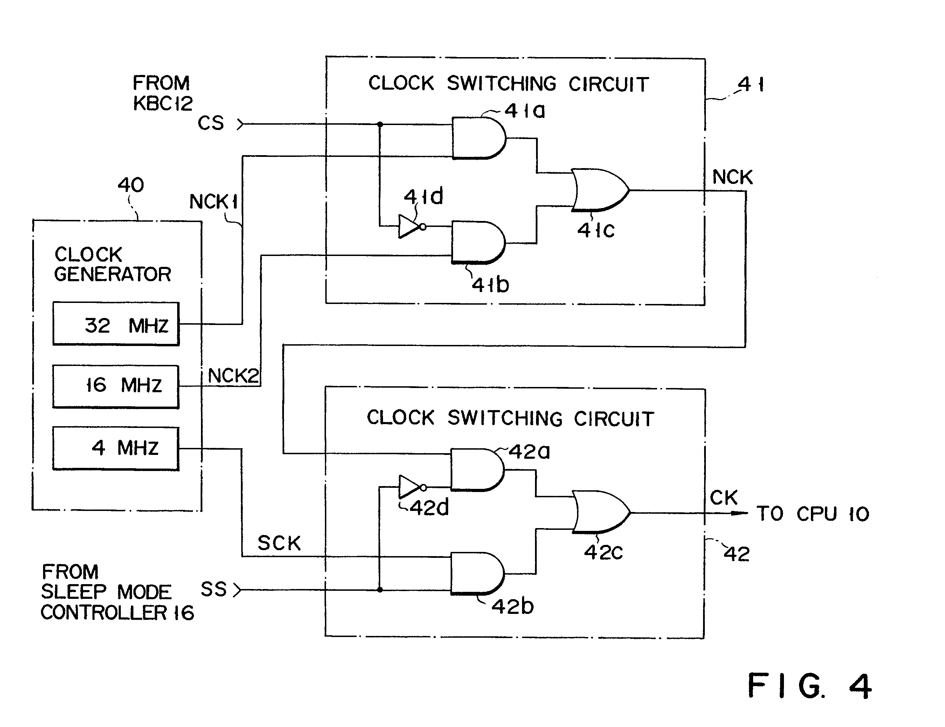

The clock control circuit 18 has a clock generator 40 to generate a clock pulse that determines the processing speed of the CPU 10, as shown in Fig. 4. The generator 40 generates clock pulses NCK1 and NCK2 needed for the normal operation (high-speed operation) of the CPU 10 and a clock pulse SCK of a low frequency (e.g., 4 MHz) required for a sleep mode. The clock pulse NCK1 is a high-frequency pulse of 32 MHz, for example, and the clock pulse NCK2 a high-frequency pulse of 16 MHz, for example. The clock control circuit 18 has a first clock switching circuit 41 and a second clock switching circuit 42.

The first clock switching circuit 41 selects the clock pulse NCK1 or NCK2 in accordance with a clock switch signal CS output from the KBC 12, and outputs the selected pulse as a clock pulse NCK in normal mode. The first clock switching circuit 41 comprises a logic circuit having AND circuits 41a and 41b, an OR circuit 41c and an inverter 41d. The second clock switching circuit 42 selects and outputs the clock pulse SCK in sleep mode in accordance with the clock switch signal CS from the sleep mode controller 16, while it selects and outputs the clock pulse NCK from the first clock switching circuit 41 in normal mode. The second clock switching circuit 42 comprises a logic circuit having AND circuits 42a and 42b, an OR circuit 42c and an inverter 42d.

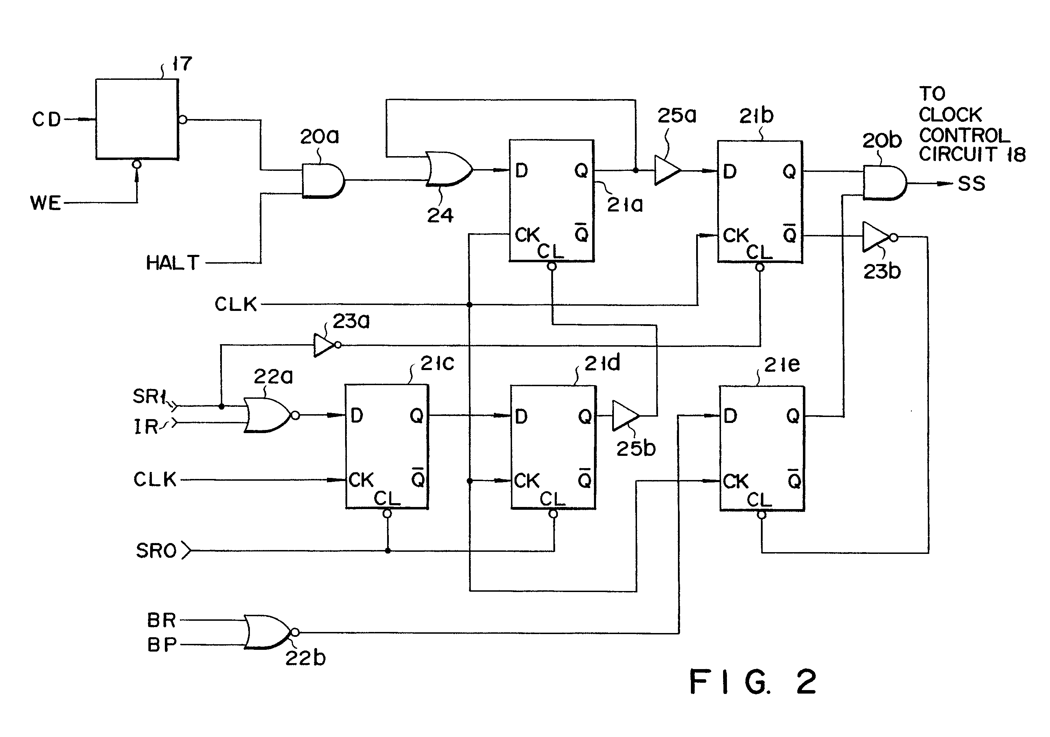

Specifically, the sleep mode controller 16 has a circuit as illustrated in Fig. 2. That is, the controller 16 is a logic circuit having AND circuits 20a and 20b, flip-flops 21a to 21e, NAND circuits 22a and 22b, inverters 23a and 23b, an OR circuit 24 and buffer circuits 25a and 25b. The AND circuit 20a has a first input terminal supplied with mode control data CD stored in the control register 17 and a second input terminal supplied with a HALT instruction from the CPU 10. The HALT instruction, when its logic level is "H" (high), is a significant signal. The mode control data CD enables a sleep mode when its logic level is "H," and disables the sleep mode when the logic level is "L" (low). When the mode control data CD of a logical level "L" is stored in the control register 17 and the HALT instruction of a logical level "H" is input, therefore, the AND circuit 20a outputs a signal of a logical level "H" to the OR circuit 24. The control register 17 is rendered writable by a write enable signal WE which is formed by decoding an I/O address output from the CPU 10. The mode control data CD is set in the control register 17 by CPU 10 in accordance with a key input from the keyboard 11, for example.

The NAND circuit 22a has a first input terminal supplied with a system reset signals SR0 and SR1 and a second input terminal supplied with a sleep mode release signal (interrupt request) IR. The system reset signal SR1 is a reset signal (logic level "H") output from the gate array (not shown). This gate array generates a reset signal upon receiving a power on/off reset signal from the power source (not shown) or a control signal from the keyboard 11. The release signal IR is a power of signal (power on reset signal) output from the power source (not shown) or an interrupt signal from the interrupt controller (not shown). The NAND circuit 22b has a first input terminal supplied with a signal BR output from, for example, the DMA controller (not shown) so as to request the freeing of a system bus (19 in Fig. 1) and a second input terminal supplied with a signal BP output from CPU 10 so as to permit the use of the system bus 19. The signals BR and BP, which are significant signals when their logic level is "H," are generated at the time of accessing a file. When there is no file access, therefore, the signals BR and BP both have a logic level "L." The flip-flops 21a to 21e each have a clock terminal CK supplied with a clock CLK from a clock generator (not shown). The AND circuit 20b serves to output the control signal SS that is an output signal of the controller 16. When the mode control data CD has a logic level "L," the HALT instruction has a logic level "H," and the signals BR and BP have a logic level "L," the AND circuit 20b outputs the "H"-level control signal SS, which means setting of the sleep mode. When one of the system reset signal SR and release signal IR has a logic level "H," the sleep mode is released. When the "H"-level mode control data CD, which means inhibition of the control operation of the controller 16, is set in the control register 17, the sleep mode is also released.

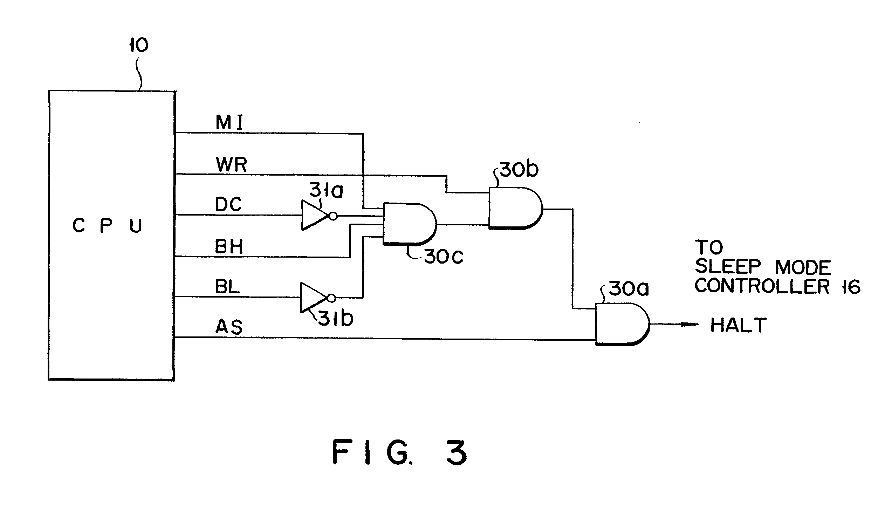

The HALT instruction is generated by a status decode circuit (LOGIC 100 shown in Fig. 1) as shown in Fig. 3. This circuit has AND circuits 30a to 30c and inverters 31a and 31b. The CPU 10 outputs various status signals MI, WR, DC, BH, BL and AS to the status decode circuit. The signal MI means a memory access when its logic level is "H," and means an I/O access when having a logic level "L." The signal WR means a write mode when having a logic level "H" and means a read mode when having a logic level "L." The signal DC means data when having a logic level "H" and means a command when having a logic level "L." In accessing 16-bit data, for example, the signal BH when having a logic level "H" means that the upper byte of the data is enabled, and the signal BL when having a logic level "H" means that the lower byte of the data is enabled. The signal AS when having a logic level "H" means that an address signal is valid. The status decode circuit renders the AND circuit 30a to output the "H"-level HALT instruction upon reception of the "H"-level signal MI, "H"-level signal WR, "L"-level signal DC, "H"-level signal BH, "L"-level signal BL and "H"-level signal AS from the CPU 10.

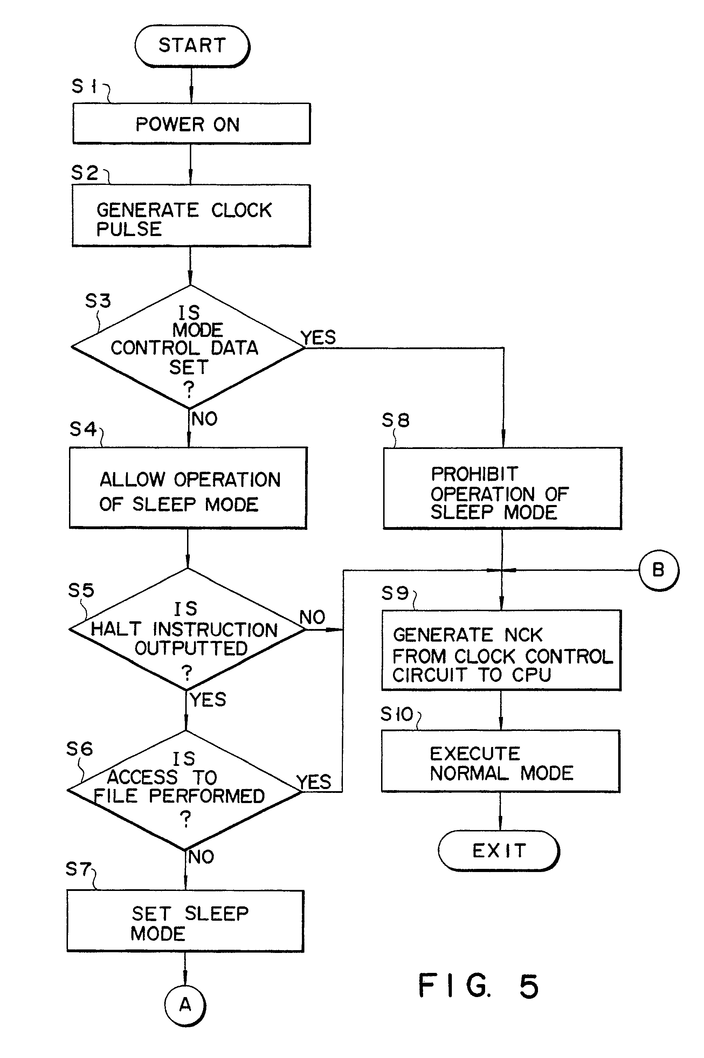

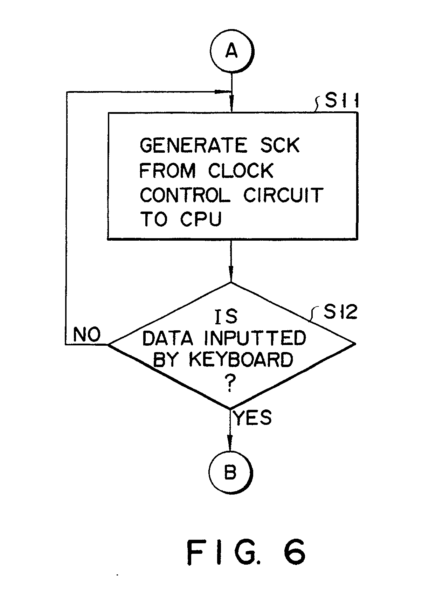

The operation of this embodiment will be described below referring to Figs. 5 and 6.

When the power of the battery of the system is set ON, the clock generator 40 of the clock control circuit 18 is activated to generate the clock pulses NCK1, NCK2 and SCK (steps S1 and S2). The first clock switching circuit 41 selects the clock pulse NCK1 or NCK2 in accordance with the clock switch signal CS output from the KBC 12 and outputs the selected pulse as a clock pulse NCK in normal mode. The sleep mode controller 16 outputs the "L"-level control signal SS to the clock control circuit 18 when a predetermined condition for setting the sleep mode is not met. In other words, the second clock switching circuit 42 of the clock control circuit 18 sends the clock pulse NCK as a clock CK to the CPU 10 in normal mode, as shown in Fig. 4. In response to the clock pulse NCK (NCK1 or NCK2), the CPU 10 executes the normal, high-speed data processing (normal mode).

In the control register 17 is set mode control data CD having a logic level "L" which means permission of the control operation of the sleep mode controller 16 (YES in step 3 or step 4). When a predetermined condition is satisfied, the controller 16 executes the sleep mode. That is, the CPU 10 executes the BIOS stored in the ROM 14 to detect the state where no key input operation through the keyboard 11 is performed for a given period of time. More specifically, the CPU 10 outputs the HALT instruction when input data from the KBC 12 is not stored in the key buffer of the memory 13 for a given period of time (YES in step S5). In other words, with no input data being stored in the key buffer, the status decode circuit (see Fig. 3) outputs the "H"-level HALT instruction to the controller 16. When no file access is conducted to the I/O device 15 as an external storage device via the system bus 19 for a given period of time, the "L"-level signals BR and BP are output to the controller 16 (NO in step S6). When such conditions (YES in step S5 and NO in step S6) are satisfied, the controller 16 outputs the "H"-level control signal SS to the clock control circuit 18. Upon reception of the "H"-level control signal SS, the second clock switching circuit 42 of the clock control circuit 18 supplies the low-frequency clock pulse SCK as the clock CK to the CPU 10. As a result, the mode of the CPU 10 is switched to the sleep mode from the normal mode or high-speed operation mode, and the CPU 10 executes low-speed data processing according to this clock pulse SCK (steps S7 and S11). This sleep mode is released when there is an IR signal generated by inputting data through the keyboard 11 (step S12) or when there is a file access.

When the mode control data CD having a logic level "H" which inhibits the control operation of the sleep mode controller 16 is input from the keyboard 11, it is set in the control register 17 (YES in step S3). As an "L"-level signal is input to the first input terminal of the AND circuit 20 of the controller 16 from the control register 17, as shown in Fig. 2, setting of the sleep mode is inhibited. Even if the aforementioned conditions (YES in step S5 and NO in step S6) are met, therefore, an operation in sleep mode is disabled (step S8). More specifically, the second clock switching circuit 42 of the clock control circuit 18 supplies the clock pulse NCK as the clock CK to the CPU 10 in response to the "L"-level control signal SS input. The CPU 10 performs data processing at a normal, high speed (normal mode) in response to the clock pulse NCK (steps S9 and S10).

According to the present invention, when predetermined conditions are met after the power of the system is thrown and the operation of the CPU 10 starts, the sleep mode is set. The predetermined conditions may be no key input operation done through the keyboard for a given period of time and no file access done for a given period of time. In sleep mode, the CPU 10 receives the low-frequency clock pulse SCK instead of the high-frequency clock pulse NCK which is used in normal, high-speed mode. Consequently, the CPU 10 executes a low-speed operation according to this clock pulse SCK. When the normal, high-speed operation is not required as in the case of no input/output operation being performed, therefore, the processing speed of the CPU can be reduced, thus saving the power of the system.

Even when a condition for setting the sleep mode is met, there may be a case where the CPU 10 needs to process data at a high speed as in normal mode. Such a case may be when an application program for demonstration should repeatedly be executed while no data is input from the keyboard. In this case, the mode control data CD is set in the control register 17 through a key input operation of the keyboard 11. This mode control data CD inhibits execution of the sleep mode even a condition for setting the sleep mode is satisfied. Even when a condition for setting the sleep mode is met, therefore, the CPU 10 receives the high-frequency clock pulse NCK and is permitted to run the application program at the normal, high speed. In other words, the sleep mode can be set to reduce the power consumption, but it can be disabled when needed to realize the high-speed operation of the CPU 10.

**Claims**

1. A computer system with a sleep mode function, comprising:
processor means (10), constituting a central processing unit for said system, for executing various types of data processing;
clock control means (18) for selecting one of a first clock pulse of a predetermined high frequency necessary in normal mode of said processor means (10) and a second clock pulse of a predetermined low frequency necessary in sleep mode of said processor means (10), and supplying said selected clock pulse to said processor means (10); and
sleep mode control means (16) for determining whether or not a predetermined condition for executing said sleep mode is met and controlling said clock control means (18) to supply said second clock pulse to said processor means (10) when said predetermined condition is met;
characterized by further comprising:
sleep operation control means (16, 17) for permitting or inhibiting a control operation of said sleep mode control means (16) and allowing said clock control means (18) to supply said first clock pulse to said processor means (10) upon inhibition of said control operation.

2. A computer system according to claim 1, characterized in that said clock control means (18) has clock generating means (40) for generating said first and second clock pulses, and clock switching means (42) for selecting one of said first and second clock pulses and supplying said selected clock pulse to said processor means (10) under a control of said sleep mode control means (16).

3. A computer system according to claim 1, characterized in that said sleep mode control means (16) has a logic circuit (20b) for outputting a control signal to said clock control means (18) to switch said first clock pulse to said second clock pulse when said condition for setting said sleep mode is satisfied.

4. A computer system according to claim 1, characterized in that said sleep operation control means (16, 17) has memory means (17) for storing mode control data indicating inhibition of said control operation of said sleep mode control means (16).

5. A computer system according to claim 3, characterized in that said logic circuit (20b) has a logic gate circuit for inhibiting said control signal from being output under a control of said sleep operation control means (16, 17), when said control operation of said sleep mode control means (16) is inhibited.

6. A computer system with a sleep mode function, comprising:
processor means (10), constituting a central processing unit for said system, for executing various types of data processing;
clock control means (18) for selecting one of a first clock pulse of a predetermined high frequency necessary in normal mode of said processor means (10) and a second clock pulse of a predetermined low frequency necessary in sleep mode of said processor means (10), and supplying said selected clock pulse to said processor means (10); and
sleep mode control means (16) for determining whether or not a predetermined condition for executing said sleep mode is met and controlling said clock control means (18) to supply said second clock pulse to said processor means (10) when said predetermined condition is met;
characterized by further comprising:
sleep operation control means (16, 17), having memory means (17) for storing mode control data indicating permission or inhibition of a control operation of said sleep mode control means (16), for supplying said first clock pulse to said processor means (10) based on said mode control data indicating inhibition of said control operation upon inhibition of said control operation.

7. A computer system according to claim 6, characterized in that said clock control means (18) has clock generating means (40) for generating said first and second clock pulses, and clock switching means (42) for selecting one of said first and second clock pulses and supplying said selected clock pulse to said processor means (10) under a control of said sleep mode control means (16).

8. A computer system according to claim 6, characterized in that said sleep mode control means (16) has a logic circuit (26b) for outputting a control signal to said clock control means (18) to switch said first clock pulse to said second clock pulse when said condition for setting said sleep mode is satisfied.

9. A computer system according to claim 8, characterized in that said logic circuit (20b) has a logic gate circuit for inhibiting said control signal from being output based on said mode control data stored in said memory means (17) when said control operation of said sleep mode control means (16) is inhibited.

10. A computer system with a sleep mode function comprising:

clock generating means (40) for generating a first clock having a first frequency and a second clock having a second frequency lower than said first frequency;

determining means (16) for determining whether or not a predetermined condition for executing a sleep mode is met and instructing to execute the sleep mode when the condition is met;

means (18) for switching a first clock output from said clock generating means (40) to a second clock when said determining means instructs execution of the sleep mode;

setting means (10) for setting permission/inhibition of execution of the sleep mode; and

control means (17) for inhibiting an instruction of execution of the sleep mode by said determining means (16) when said setting means (10) sets an inhibition of execution of the sleep mode.

F I G. 1

EP 0 419 908 A2

FIG. 2

EP 0 419 908 A2

F I G. 3

TO
SLEEP MODE
CONTROLLER 16

HALT

CPU

10

MI
WR
DC
BH
BL
AS

30a
30b
30c
31a
31b

FIG. 4

FIG. 5

FIG. 6